# EUROPEAN PATENT SPECIFICATION

(11) **EP 4 455 872 B1**
(45) Date of publication and mention of the grant of the patent: **28.10.2026**
(21) Application number: 23742768.7
(22) Date of filing: 10.01.2023
(51) Int. Cl.: G06F 9/48, G06F 9/50, G06F 9/455, G06F 9/448, G06F 21/53, G06F 9/54

(54) **CONTAINER LOADING METHOD AND APPARATUS**
VERFAHREN UND VORRICHTUNG ZUM LADEN VON BEHÄLTERN
PROCÉDÉ ET APPAREIL DE CHARGEMENT DE CONTENEUR

(30) Priority: 19.01.2022 CN 202210062563
(43) Date of publication of application: 30.10.2024
(73) Proprietor: Huawei Technologies Co., Ltd., Shenzhen, Guangdong 518129 (CN)
(72) Inventor: LIU, Qingyuan, Shanghai 200240 (CN); XIA, Yubin, Shanghai 200240 (CN)
(74) Representative: Isarpatent
(86) International application number: PCT/CN2023/071747
(87) International publication number: WO 2023/138453

(56) References cited:
- CN-A- 110 427 248
- CN-A- 111 475 235
- CN-A- 113 672 343
- CN-A- 113 703 867
- CN-A- 113 934 435
- US-A1- 2014 244 716
- LIN ZHEN ET AL: "FlashCube Fast Provisioning of Serverless Functions with Streamlined Container Runtimes", PROCEEDINGS OF THE 1ST ACM CONFERENCE ON ADVANCES IN FINANCIAL TECHNOLOGIES, ACMPUB27, NEW YORK, NY, USA, 25 October 2021 (2021-10-25), pages 38 - 45, XP058909969, ISBN: 978-1-4503-9766-7, DOI: 10.1145/3477113.3487273
- KALEV ALPERNAS ET AL: "Secure serverless computing using dynamic information flow control", PROCEEDINGS OF THE ACM ON PROGRAMMING LANGUAGES, ACM, 2 PENN PLAZA, SUITE 701NEW YORKNY10121-0701USA, vol. 2, no. OOPSLA, 24 October 2018 (2018-10-24), pages 1 - 26, XP058422245, DOI: 10.1145/3276488
- ANONYMOUS: "Serverless and Containers", 5 May 2021 (2021-05-05), pages 1 - 1, XP093254893, Retrieved from the Internet <URL:https://web.archive.org/web/20210505050853/https://docs.aws.amazon.com/whitepapers/latest/logical-separation/serverless-and-containers.html>

## Description

### TECHNICAL FIELD

The present invention relates to the field of communication technologies, and in particular, to a container loading method and an apparatus.

### BACKGROUND

Serverless computing is also referred to as Function as a Service (FaaS), and is a new programming paradigm in the cloud computing field. In the serverless paradigm, a user decouples application logic at a granularity of a function, and submits generated function code to a cloud service provider. The cloud service provider is responsible for function deployment and computing. After submitting the function code to the cloud service provider, the user can send a function call request with a parameter to the cloud service provider. The function code submitted by the user is usually not trusted by a serverless computing apparatus. Therefore, when executing a function call, the serverless computing apparatus needs to isolate a running environment of a function, so that the function runs in a complete isolation environment.

In the conventional technology, an implementation of the isolation environment includes a Linux container, Firecracker, and the like. Running of the function in the serverless computing apparatus depends on a function instance. When the serverless computing apparatus receives the function request sent by the user, if the serverless computing apparatus does not have an available function instance, the serverless computing apparatus needs to initialize an entire instance environment to support the function call request. Such a start is referred to as a "cold start". The serverless computing has characteristics of a high cold start frequency and a high proportion of a total start latency to a total end-to-end latency. Therefore, the start latency is critical to overall performance of the serverless computing.

LIN ZHEN ET AL: "FlashCube Fast Provisioning of Serverless Functions with Streamlined Container Runtimes", PROCEEDINGS OF THE 1ST ACM CONFERENCE ON ADVANCES IN FINANCIAL TECHNOLOGIES, ACMPUB27, NEW YORK, NY, USA, 25 October 2021 (2021-10-25), pages 38-45, DOI: 10.1145/3477113.3487273 ISBN: 978-1-4503-9766-7, discusses the challenge of slow provisioning times for serverless functions in cloud computing environments, particularly due to the overhead of initializing container-based sandboxes. The document analyzes the sources of cold-start latency in Linux containers and identifies key bottlenecks such as serialized initialization pipelines, costly construction of namespaces, and excessive I/O operations. To address these issues, the document introduces "FlashCube," a user-space containerization framework that assembles containers from pre-created parts, reducing start-up times for serverless functions.

KALEV ALPERNAS ET AL: "Secure serverless computing using dynamic information flow control", PROCEEDINGS OF THE ACM ON PROGRAMMING LANGUAGES, ACM, 2 PENN PLAZA, SUITE 701NEW YORKNY10121-0701USA, vol. 2, no. OOPSLA, 24 October 2018 (2018-10-24), pages 1-26, DOI: 10.1145/3276488, presents an approach to securing serverless computing platforms using dynamic information flow control (IFC). The document identifies that traditional IFC systems are vulnerable to information leakage through the termination channel, which can be exploited in serverless environments due to their concurrent and elastic nature. To mitigate this, the document proposes a model that combines static labeling of serverless processes with dynamic, faceted labeling of persistent data, ensuring a stronger security guarantee known as termination-sensitive non-interference (TSNI).

Anonymous: "Serverless and Containers", 5 May 2021 (2021-05-05), pages 1-1, Retrieved from the Internet: URL:https://web.archive.org/web/20210505050853/https:// docs.aws.amazon.com/whitepapers/latest/logical-separation/ serverless-and-containers.html, is a practical guide and reference for application security, focusing on foundational concepts and best practices for developing secure software.

### SUMMARY

An object of the present invention is to provide a container loading method and an apparatus. This object is solved by the subject-matter of the appended independent claims, wherein further embodiments are set out in the dependent claims. A pre-prepared function container is used as a container isolation environment of a function, so that overheads of initializing the container isolation environment are reduced, and a language runtime status corresponding to an initialized function is reused by using a fork method, thereby optimizing initialization time of a language runtime.

According to a first aspect, an embodiment of this application provides a multi-thread container loading method. The method includes: receiving a function call request sent by a user, where the function call request includes information of a function; obtaining a process identifier of a corresponding function container based on the information of the function, where the function is deployed in the function container; forking a main thread of a language runtime process in a template container based on the process identifier of the function container, to obtain a target child process, where both the language runtime process in the template container and the target child process are language runtime processes corresponding to the function, and a namespace of the target child process is located in the function container; switching a control group of the target child process to a control group of the function container based on the process identifier of the target child process, to migrate the target child process to the function container; and loading the function in the function container.

According to the multi-thread container loading method provided in this embodiment of this application, a pre-prepared function container is used as a final running environment of the function. Then, a language runtime status of an initialized function is copied to the function container by using a fork method, to initialize the running environment of the function. In this embodiment of this application, the pre-initialized language runtime status is reused, so that a critical path in a process of initializing a language runtime corresponding to the function is skipped, thereby significantly optimizing initialization time of the language runtime. In addition, the pre-prepared function container is used as the final running environment of a function instance, and initialization overheads of a container isolation environment are further reduced.

Before the receiving function call sent by a user, the method further includes: receiving function code and a functional dependency that are sent by the user; and deploying the function code and the functional dependency of the function in the function container.

In other words, a pre-prepared function container is used as a running environment of the function, and initialization overheads of a container isolation environment are further reduced.

In a possible implementation, the information of the function includes at least one of a function name, a function type, and a function ID.

In other words, based on function call information carried in the function call request, a language runtime of the function that needs to be called and the function container on which the function that needs to be called is deployed may be further determined.

In a possible implementation, before the forking a main thread of a language runtime process in a template container based on the process identifier of the function container, to obtain a target child process, the method further includes: obtaining a template container corresponding to the function; when the template container corresponding to the function does not exist, creating, based on a language runtime corresponding to the function, a template container corresponding to the function; and storing the template container.

In other words, a template container corresponding to a language runtime of a function is stored in a serverless computing apparatus in advance. After receiving the function call request, the serverless computing apparatus may directly fork the template container corresponding to the function call request. When the template container corresponding to the function that needs to be called by the function call request is not stored in the serverless computing apparatus, after receiving the function call request, the serverless computing apparatus may determine, based on the received function call request, the language runtime of the function that needs to be called, then the serverless computing apparatus generates a corresponding template container based on the language runtime, and stores the template container. In this embodiment of this application, a template container corresponding to each language runtime needs to be created for only once. The created template container is stored in the serverless computing apparatus. After receiving the function call request, the serverless computing apparatus can copy an initialized language runtime status (template container), thereby significantly improving initialization time of the language runtime.

In a possible implementation, before the forking a main thread of a language runtime process in a template container based on the process identifier of the function container, to obtain a target child process, the method further includes: when the language runtime of the function is multi-threaded, obtaining status information of each working thread in at least one working thread; when the status information of each working thread in the at least one working thread is a first state, disabling each working thread in the at least one working thread, where the first state includes: a state in which the working thread is blocked because of waiting for a task, a state in which the working thread does not need to store context, and a state in which the working thread has no logical interaction with the main thread; and when status information of at least one working thread in at least two working threads is not the first state, suspending a working thread whose status information is the first state in the at least two working threads, and when status information of each working thread in the at least two working threads is the first state, disabling each working thread in the at least two working threads, or storing context of a working thread whose status information is not the first state, and disabling each working thread in the at least two working threads.

In other words, before a fork operation is performed on the template container, statuses of a plurality of working threads of the template container further need to be determined. Then, based on status information of each working thread, it is selected whether to directly disable the working thread or disable the working thread after context of the working thread is stored. After the working thread is disabled, the template container has only one main thread. Therefore, the fork operation can be called for the main thread to generate a new thread. Initialization time of the language runtime of the function is significantly optimized.

In a possible implementation, the forking a main thread of a language runtime process in a template container based on the process identifier of the function container, to obtain a target child process includes: forking the main thread for the first time, to obtain a first child process; switching a namespace of the first child process to the function container based on the process identifier of the function container; and forking the first child process to obtain the target child process, where the namespace of the target child process is located in the function container.

In other words, after fork is performed on the main thread of the template container for the first time, the namespace of the first child process generated through fork for the first time further needs to be switched to the function container based on the process identifier of the function container. Specifically, the namespace of the first child process may be switched to the function container by performing a system call by using setns and chroot of Linux.

In a possible implementation, after the switching a control group of the target child process to the function container based on the process identifier of the target child process, the method further includes: initializing a data structure used to manage a working thread, and creating a working thread of the target child process.

In other words, before and after a fork operation is performed on the template container, status storage and status recovery are respectively performed on a plurality of threads of a multi-thread language runtime in the template container, so that the main thread of the template container can directly call the fork operation to copy a status of the main thread, and recover statuses of the plurality of threads after the fork operation, to create a multi-thread language runtime process through the fork operation.

According to a second aspect, an embodiment of this application provides a serverless computing apparatus. The serverless computing apparatus is configured to load a multi-thread container in a serverless computing process, and the apparatus includes:
a receiving module, configured to receive a function call request sent by a user, where the function call request includes information of a function; and
a processing module, configured to obtain a process identifier of a corresponding function container based on the information of the function, where the function is deployed in the function container, and
the processing module is further configured to: fork a main thread of a language runtime process in a template container based on the process identifier of the function container, to obtain a target child process, both the language runtime process in the template container and the target child process are language runtime processes corresponding to the function, and a namespace of the target child process is located in the function container; switch a control group of the target child process to a control group of the function container based on the process identifier of the target child process, to migrate the target child process to the function container; and load the function in the function container.

The receiving module is further configured to:
receive function code and a functional dependency that are sent by the user; and
deploy the function code and the functional dependency of the function in the function container.

In a possible implementation, the information of the function includes at least one of a function name, a function type, and a function ID.

In a possible implementation, the processing module is further configured to:
obtain a template container corresponding to the function;
when the template container corresponding to the function does not exist in the serverless computing apparatus, create, based on a language runtime corresponding to the function, a template container corresponding to the function; and
store the template container in the serverless computing apparatus.

In a possible implementation, before forking the main thread of the language runtime process in the template container based on the process identifier of the function container, to obtain the target child process, the processing module is further configured to:
when the language runtime of the function is multi-threaded, obtain status information of each working thread in at least one working thread;
when the status information of each working thread in the at least one working thread is a first state, disable each working thread in the at least one working thread, where the first state includes: a state in which the working thread is blocked because of waiting for a task, a state in which the working thread does not need to store context, and a state in which the working thread has no logical interaction with the main thread; and
when status information of at least one working thread in at least two working threads is not the first state, suspend a working thread whose status information is the first state in the at least two working threads, and when status information of each working thread in the at least two working threads is the first state, disable each working thread in the at least two working threads, or store context of a working thread whose status information is not the first state, and disable each working thread in the at least two working threads.

In a possible implementation, the processing module is further configured to:
fork the main thread for the first time, to obtain a first child process;
switch a namespace of the first child process to the function container based on the process identifier of the function container; and
fork the first child process to obtain the target child process, where naming control of the target child process is located in the function container.

In a possible implementation, the processing module is further configured to:
initialize a data structure used to manage a working thread, and create a working thread of the target child process.

According to a third aspect, an embodiment of this application provides a serverless computing apparatus, including:
at least one memory, configured to store a program; and
at least one processor, configured to execute the program stored in the memory, and when the program stored in the memory is executed, the processor is configured to perform the method according to the first aspect.

According to a fourth aspect, an embodiment of this application provides a serverless computing system, including the serverless computing apparatus according to the second aspect.

According to a fifth aspect, an embodiment of this application provides a computer-readable medium. The computer storage medium stores instructions, and when the instructions are run on a computer, the computer is enabled to perform the method according to the first aspect.

According to a sixth aspect, an embodiment of this application provides a computer program product including instructions. When the instructions are run on a computer, the computer is enabled to perform the method according to the first aspect.

According to a seventh aspect, an embodiment of this application provides a chip. The chip includes a memory and a processor, the memory is configured to store computer instructions, and the processor is configured to: call the computer instructions from the memory and run the computer instructions, to perform the method according to the first aspect.

### BRIEF DESCRIPTION OF DRAWINGS

FIG. 1a is diagram of a system architecture of a serverless computing apparatus in a first solution;
FIG. 1b is a schematic flowchart of a multi-thread container loading method according to the first solution;
FIG. 1c is a diagram of a start process of an isolation sandbox according to a second solution;
FIG. 2 is a diagram of an application scenario according to an embodiment of this application;
FIG. 3 is a diagram of a structure of a serverless computing apparatus according to an embodiment of this application;
FIG. 4 is a diagram of a structure of another serverless computing apparatus according to an embodiment of this application;
FIG. 5 is a diagram of a multi-thread container loading process according to an embodiment of this application;
FIG. 6 is a diagram of a thread status change in a multi-thread fork operation based on a template container according to an embodiment of this application;
FIG. 7 is a schematic flowchart of a multi-thread container loading method according to an embodiment of this application;
FIG. 8 is a schematic flowchart of a method for performing multi-thread fork on a template container according to an embodiment of this application;
FIG. 9 is a schematic flowchart of another multi-thread container loading method according to an embodiment of this application; and
FIG. 10 is a diagram of a structure of a serverless computing apparatus according to an embodiment of this application.

### DESCRIPTION OF EMBODIMENTS

To make objectives, technical solutions, and advantages of embodiments of this application clearer, the following describes the technical solutions in embodiments of this application with reference to accompanying drawings.

In descriptions of embodiments of this application, a term "and/or" describes only an association relationship for describing associated objects and indicates that three relationships may exist. For example, A and/or B may indicate the following three cases: Only A exists, both A and B exist, and only B exists. In addition, unless otherwise specified, a term "plurality" means two or more. For example, a plurality of systems means two or more systems, and a plurality of screen terminals mean two or more screen terminals.

Moreover, terms "first" and "second" are merely intended for description, and shall not be understood as an indication or implication of relative importance or implicit indication of an indicated technical feature. Therefore, a feature limited by "first" or "second" may explicitly or implicitly include one or more features. Terms "include", "have", and their variants all mean "include but are not limited to", unless otherwise specifically emphasized in another manner.

Before the solutions in this application of the present invention are described, key terms that need to be used in embodiments of this application of the present invention are first explained.

Language runtime: is a runtime environment provided by a high-level language like Python.

Function instance: is an entire isolation environment of a function in serverless computing. When a container is used as an isolation mode of the function, the function instance is a container isolation environment that includes a complete running environment of the function.

Functional dependency: is a "constraint" between relationships of different attributes (or attribute sets) in a database, and can also be regarded as a mapping between the attributes.

Instance cold start: is a process of recreating a complete function instance in serverless computing.

Container isolation technology: A serverless computing provider usually chooses a container or a virtual machine as a sandbox for running a serverless function. A Linux container uses a control group (cgroup) and a namespace (namespace) to control and isolate operating system resources (such as a file system, a process identifier, and a network) and computing resources (such as a CPU and a memory) used by the container. In addition, a system call of a container process needs to be performed by reusing a kernel of a host operating system. When the system needs to start an empty container, an idle process can be started, and a new namespace and cgroup are set for the process. In this case, a process identifier of the idle process is a process identifier of the empty container. Further, an idle process in the empty container can be determined by obtaining the process identifier of the empty container, and a namespace and a cgroup of the empty container can be determined based on the idle process.

Main thread: is a thread used to implement a main function of a corresponding program.

Working thread: is a thread other than the main thread in a process.

POSIX Fork technology: A POSIX includes a fork-based system call, which is a basic method for generating a new process. A fork operation creates a new address space as an address space of a child process (a new process generated through the fork operation). The new address space has a same memory segment as a parent process (a process used to be forked in the fork operation). To reduce memory copy overheads during fork, the fork-based system call uses a copy-on-write (Copy-on-Write) method. During fork, copy is not performed in the new address space. Instead, the two address spaces first point to a same physical memory segment, a copy-on-write mark is set, and a physical memory page is copied when a write operation occurs. A copy-on-write mechanism improves performance of the fork operation. In a scenario in which a serverless function is started, because different instances of a same function have similar start processes, the fork-based system call is used to fork a new instance from an initialized "template" process. This can greatly improve start performance of the serverless instance.

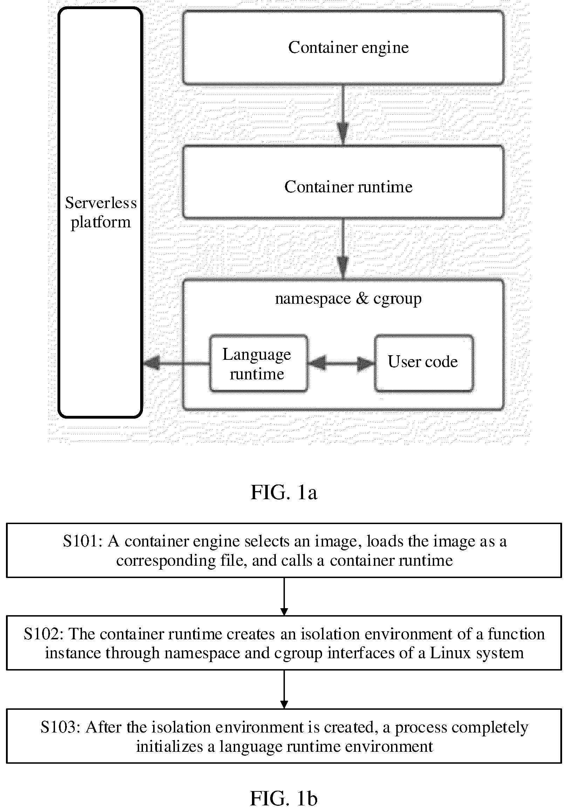

Currently, there are several solutions that can initialize a function instance environment in a serverless computing apparatus, to support a function call request. In a first solution, as shown in FIG. 1a, a serverless computing apparatus includes a container engine, a container runtime, and a language runtime. The container engine is responsible for processing a function call request of a user. After receiving the function call request from the user, the container engine manages and mounts a container image, and calls the container runtime. The container runtime creates a container isolation environment through namespace (namespace) and control group (cgroup) interfaces of Linux. An execution process of the first solution is shown in FIG. 1b, and includes step S101 to step S103.

Step S101: The container engine obtains the container image based on a function requested in the function call request of the user, mounts the container image, and calls the container runtime.

Step S102: The container runtime creates an isolation environment of a function instance through the namespace and cgroup interfaces of Linux.

Step S103: After the isolation environment is created, a container process completely initializes a language runtime environment.

In the first solution, the container isolation environment of the function can be well loaded, and the loaded container isolation environment can establish a connection to the serverless computing apparatus for use. However, a cold start of this solution requires loading of a complete function isolation environment and initialization of a complete language runtime. Time consumed for an entire process is long. In addition, in this solution, a similarity between different function instances is not fully used, but initialization work is repeated a plurality of times.

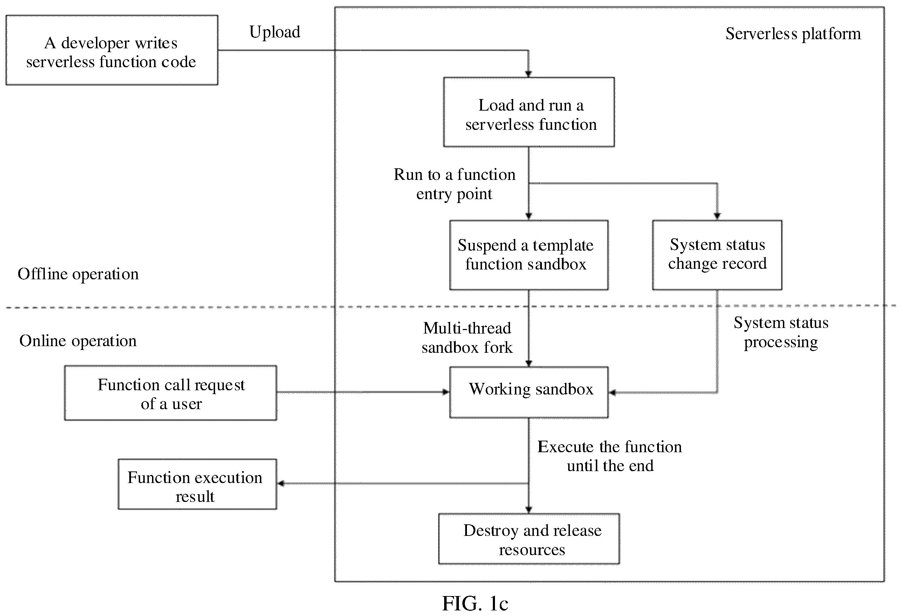

As shown in FIG. 1c, in a second solution, a fast start of an isolation sandbox written based on a multi-thread language is implemented through multi-thread sandbox secure fork (fork).

The second solution is implemented through fork at an operating system (OS) layer based on a virtualization technology, is not a method based on a user mode, and has a high usage threshold. In addition, the second solution is mainly performed on a virtualization-based isolation sandbox and cannot be directly compatible with an existing container isolation method.

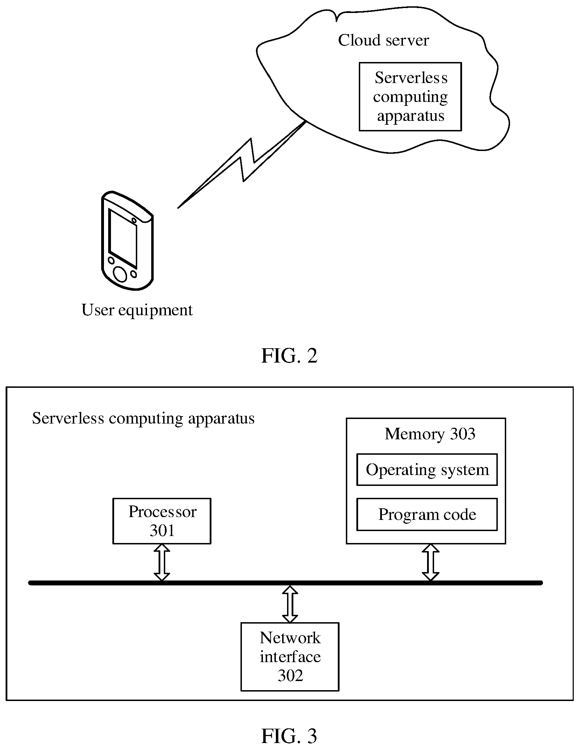

FIG. 2 is a diagram of an application scenario according to an embodiment of this application of the present invention. As shown in FIG. 2, in this embodiment of this application, a serverless computing (Serverless Computing) apparatus is deployed on a cloud server, and is configured to provide serverless computing for user equipment. In a serverless mode, the user equipment decouples application logic at a granularity of a function, and uploads, to the cloud server, function code and a functional dependency that are generated based on the application logic. Then, the user equipment may send a function call request to the cloud server, where the function call request carries parameter information that needs to be used for the function call. After the cloud server receives the function call request sent by the user equipment, the serverless computing apparatus deployed on the cloud server deploys and computes the pre-received function code based on the received function call request. Further, the function code submitted by the user is not trusted by the serverless computing apparatus. Therefore, the serverless computing apparatus needs to isolate a running environment of a function of the user, so that the function runs in a complete isolation environment.

FIG. 3 is a diagram of a structure of a serverless computing apparatus according to an embodiment of this application. As shown in FIG. 3, the apparatus includes a processor 301, a network interface 302, and a memory 303. The processor 301, the network interface 302, and the memory 303 may be connected through a bus or in another manner.

The memory 303 is a storage device of the serverless computing apparatus, and is configured to store a program and data, for example, store function code and a functional dependency sent by a user. The memory 303 provides storage space, where the storage space stores an operating system of a server and program instructions used to implement a multi-thread container loading method. The operating system includes but is not limited to a Windows system (an operating system), a Linux system (an operating system), HarmonyOS (an operating system), or the like. This is not limited herein.

In this solution, the processor 301 (or referred to as a central processing unit (central processing unit, CPU)) is a computing core and a control core of the serverless computing apparatus. The processor 301 reads the program instructions and the data that are stored in the memory 303, to execute the multi-thread container loading method. After reading the program instructions stored in the memory 303, the processor 301 stores the received function code and functional dependency.

The network interface 302 may include a standard wired interface and wireless interface (for example, Wi-Fi and a mobile communication interface). The network interface 302 is controlled by the processor 301 and is configured to receive and send data, for example, receive the function code and the functional dependency that are sent by the user.

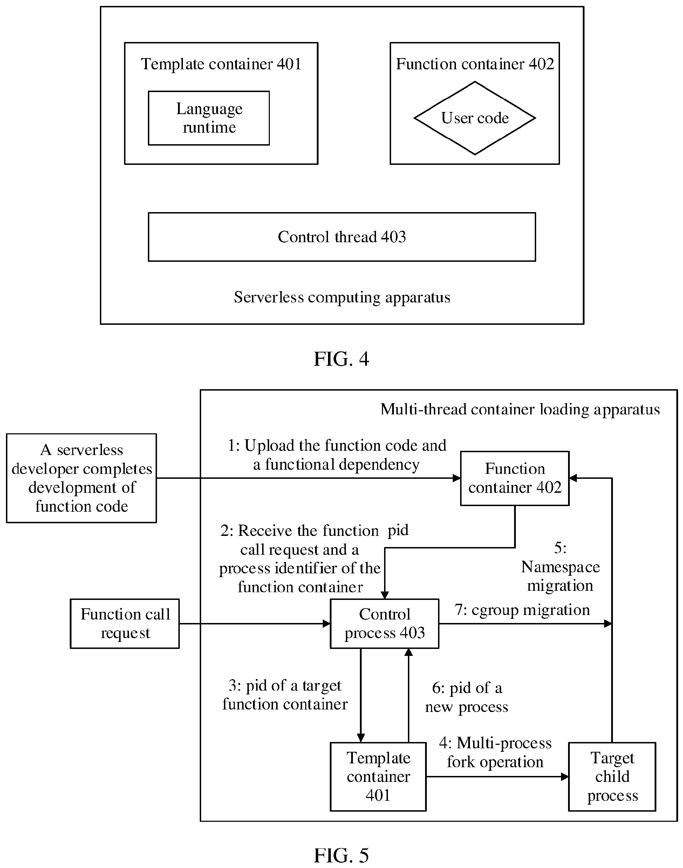

FIG. 4 is a diagram of a structure of another serverless computing apparatus according to an embodiment of this application. It should be noted that, the diagram of the structure of the serverless computing apparatus provided in FIG. 4 is a diagram of a structure of a specific state in a process in which after the serverless computing apparatus receives a function call request sent by a user, the serverless computing apparatus generates a corresponding function instance based on the function call request, and migrates the function instance to a corresponding isolation environment (function container). As shown in FIG. 4, the apparatus includes a template container 401, a function container 402, and a control thread 403. The template container 401 includes a language runtime process of a corresponding function. The language runtime process in the template container 401 serves as a "parent" instance of all child instances. When language runtime process in the template container 401 serves as a parent process, a new instance is generated by using a multi-thread fork method. The function container 402 is an isolation environment in which a function finally runs. The control thread 403 is configured to manage a process of generating the new instance through fork. The serverless computing apparatus provides complete function request call logic externally.

In this embodiment of this application, the user uploads, to the serverless computing apparatus, function code and a functional dependency that are written in advance. The serverless computing apparatus deploys the received function code and functional dependency in the function container 402. Then, the serverless computing apparatus creates a template container 401 based on a language runtime of a received function. After the serverless computing apparatus receives the function call request sent by the user, the serverless computing apparatus forwards the received function call request to the template container 401 by using the control thread 403. In addition, the serverless computing apparatus further needs to send a process identifier (pid) of the function container 402 to the template container 401 by using the control process. After receiving the function call request sent by the user and the process identifier of the function container 402, the template container 401 starts to perform fork-based function instance creation.

The foregoing describes the serverless computing apparatus in this solution. The following describes in detail, based on the serverless computing apparatus shown in FIG. 4 and a multi-thread container loading process in a serverless computing apparatus shown in FIG. 5, a user-mode-based multi-thread container loading solution in this solution. For details, see the following description.
(1) A user uploads function code and a functional dependency to the serverless computing apparatus.

After developing the function code, a serverless developer uploads the function code and the functional dependency to the serverless computing apparatus. After receiving the function code and the functional dependency that are uploaded by the user, the serverless computing apparatus deploys the function code and the functional dependency in a corresponding function container.

It should be noted that the function container in the serverless computing apparatus may be an empty container pre-existing in the serverless computing apparatus, or may be a function container newly created by the serverless computing apparatus after the serverless computing apparatus receives the function code and the functional dependency that are uploaded by the user. The empty container is a group of namespace and cgroup that exists in the serverless computing apparatus, and the namespace and cgroup include an idle process. In a possible example, after receiving the function code and the functional dependency that are uploaded by the user, the serverless computing apparatus determines whether an empty container exists in the serverless computing apparatus. When an empty function container exists in the serverless computing apparatus, the serverless computing apparatus uses the empty container as the function container, and deploys the received function code and functional dependency in the function container. When no empty container exists in the serverless computing apparatus, the serverless computing apparatus regenerates an empty container as the function container. Then, the serverless computing apparatus deploys the received functional dependency and function code in the function container.

(2) The control process receives a function call request sent by the user and obtains a process identifier of the function container. In this solution, after receiving the function call request sent by the user, the serverless computing apparatus further needs to obtain the process identifier of the function container by using the control process in the serverless computing apparatus. A function that needs to be called by the function call request is deployed in the function container.

It should be noted that there is no sequence between two operations of receiving, by the control process, the function call request sent by the user and obtaining the process identifier of the function container.

In a possible example, the function call request sent by the user includes information of the function. The information of the function includes at least one of a function name, a function type, and a function ID. The control process determines the function container based on the information of the function, and further obtains the process identifier of the function container. It should be noted that the function name is a name of the function when the user uploads the written function to the serverless computing apparatus. The function ID is an identifier generated by the serverless computing apparatus for the function after the user uploads the function to the serverless computing apparatus. Specifically, a hash value of the function is calculated by using the serverless computing apparatus, and the corresponding identifier is generated for the function based on the hash value obtained through calculation.

In another possible example, after the serverless computing apparatus deploys, in the function container, the function code and the functional dependency that are sent by the user, the function container actively sends the process identifier of the function container to the control process.

(3) The control process forwards the process identifier of the function container to a corresponding template container based on the received function call request.

After receiving the function call request, the control process determines, based on a language runtime of the function that needs to be called by the function call request, the template container corresponding to the function. The template container includes a language runtime process of the function. Then, the control process sends the received function call request and the process identifier of the function container to the template container.

(4) The control process triggers a main thread of the template container to call a fork operation, to obtain a target child process.

Before calling the fork operation for the template container, whether a language runtime of the template container is multi-threaded further needs to be determined. When the language runtime of the template container is not multi-threaded, the template container directly calls the fork operation.

When the language runtime of the template container is multi-threaded, after receiving the function call request sent by the user, multi-thread fork is performed on the template container based on a POSIX Fork technology, to obtain a target child process.

In an example, before the fork operation is called for the template container, a status of a working thread of the template container further needs to be determined, to determine whether the working thread of the template container can be directly disabled. Specifically, the template container obtains status information of each working thread. When the status information of each working thread is a first state, the template container disables the working thread of the template container. The first state includes: a state in which the working thread is blocked because of waiting for a task, a state in which the working thread does not need to store context, and a state in which the working thread has no logical interaction with the main thread. When status information of at least one working thread in the working thread of the template container is not the first state, the template container suspends a working thread whose status information is the first state in at least two working threads, and when status information of each working thread in the at least two working threads is the first state, the template container then disables the working thread of the template container, or stores context of a working thread whose status information is not the first state, and the template container disables the working thread of the template container.

It should be noted that, in this embodiment of this application, the template container "disables" the working thread, and the action of "disabling" does not really exist. In a process in which fork is performed on the main thread of the template container, for a parent process of the plurality of threads, fork is performed only on a thread that actually calls fork (the main thread of a language runtime process in the template container in this embodiment of this application), and another process disappears from the child process generated after fork.

(5) The template container migrates a namespace of the generated process to the function container based on the process identifier of the function container.

When the template container performs the multi-thread fork, a container isolation environment of the newly generated process needs to be migrated. Specifically, the template container needs to perform the multi-thread fork twice to switch the namespace of the newly generated process to a namespace of the function container. The template container performs a multi-thread fork operation for the first time, to obtain a first child process. Then, the template container performs a system call on the first child process, and switches a namespace of the first child process to the function container. Although the namespace of the first child process is switched to the function container, the switching operation does not take effect in the first child process. The multi-thread fork operation needs to be performed on the first child process for the second time, to obtain the target child process. In this case, a namespace of the obtained target child process is switched to the function container.

(6) The template container forwards an obtained process identifier of the target child process to the control process.

(7) The control process switches a cgroup of the target child process to a cgroup of the function container based on the received process identifier of the target child process.

After the target child process is obtained, the pid of the target child process needs to be sent to the control process. The control process switches the cgroup of the target child process to the cgroup of the function container based on the pid of the target child process, so that the target child process is migrated to the function container.

After the target child process is migrated to the function container, the target child process initializes a data structure that is in a memory and that is used to manage a working thread, reuses the process during the initialization of the language runtime process, and re-creates various working threads. In this case, the target child process recovers running statuses of the plurality of threads.

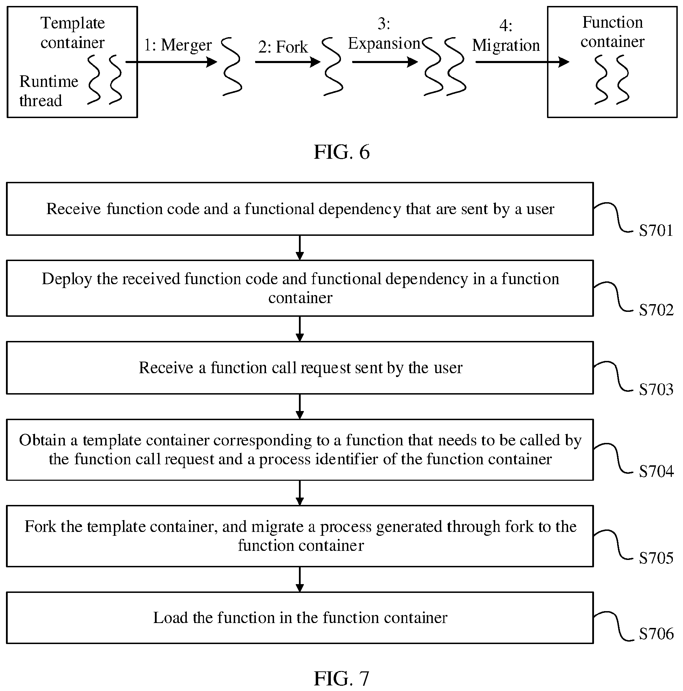

In a possible embodiment, after receiving the function call request, the template container performs the multi-thread fork operation to generate a new process. In a process in which the template container performs the fork operation to generate the target child process, processes such as multi-thread pause and multi-thread status recovery further need to be performed on the plurality of threads of the template container. FIG. 6 is a diagram of a thread status change in a multi-thread fork operation based on a template container according to an embodiment of this application. Next, the multi-thread fork in this solution is described in detail with reference to FIG. 6.

### (1) Merger

In this solution, the fork operation is performed on a plurality of threads of a language runtime in a user mode. The fork operation of POSIX cannot be directly applied to processes of the plurality of threads. For a parent process of the plurality of threads, fork is performed only on a thread that actually calls fork, and another process disappears from a child process after fork. However, an existing language runtime (for example, NodeJS) is usually multi-threaded, and therefore fork cannot be directly applied to a serverless scenario. In this solution, in a serverless computing apparatus, a corresponding template container is created in advance for each language runtime (that is, the template container includes a language runtime process). Therefore, the plurality of threads of the template container need to be processed in the user mode, to avoid a mutual exclusion problem after the fork operation is performed on the template container.

After the template container receives a function call request of a user, the template container obtains status information of a plurality of working threads of the template container. Then, the template container processes the plurality of working threads based on the obtained working status information of the plurality of working threads.

In a possible example, the template container obtains working status information of each working thread. When the working status information of each working thread is a first state, a control thread triggers a main thread of the template container to call the fork operation, and disables the working thread of the template container in a process of performing the fork operation. The first state includes: a state in which the working thread is blocked because of waiting for a task, a state in which the working thread does not need to store context, and a state in which the working thread has no logical interaction with the main thread.

In a possible example, the template container obtains the working status information of each working thread, and when status information of at least one working thread in the working thread of the template container is not the first state, the template container synchronizes a status of the working thread of the template container, so that status information of all working threads of the template container is the first state. Then, the control thread triggers the main thread of the template container to call the fork operation, and disables the working thread of the template container in the process of performing the fork operation.

In a possible example, the template container obtains the working status information of each working thread. When the status information of the at least one working thread in the working thread of the template container is not the first state, the template container stores context of the working thread whose status information is not the first state. Then, the control thread triggers the main thread of the template container to call the fork operation, and disables the working thread of the template container in the process of performing the fork operation.

### (2) Fork

After the working thread of the template container is processed, the control thread controls the main thread of the template container to call POSIX fork, to generate a target child process. When the template container migrates a container isolation environment during the fork process, POSIX fork needs to be called twice.

Specifically, after the working thread of the language runtime is disabled in the user mode, the control thread triggers the main thread of the template container to perform the fork operation for the first time, to generate a first child process. Then, the template container performs a system call by using setns and chroot of Linux based on a received pid of a function container, to switch a namespace of the first child process to a namespace of the function container. Although the namespace of the generated first child process is switched to the namespace of the function container in a process of performing fork for the first time, a setting of the namespace of the first child process in the process of performing fork for the first time does not take effect immediately. Therefore, the fork operation needs to be performed on the generated first child process for the second time.

The control thread uses the first child process as the parent process, and triggers the first child process to perform the fork operation for the second time, to generate the target child process. In this case, a namespace of the target child process is switched to the function container.

### (3) Expansion

After the fork operation is performed twice on the main thread of the template container, a namespace environment of the newly generated target child process is already in the function container. In this case, the working thread of the target child process further needs to be recovered.

In a possible example, the target child process initializes a data structure that is in a memory and that is used to manage a working thread, reuses the process during the initialization of the language runtime process, and re-creates various working threads. In this case, the newly generated target child process recovers running statuses of the plurality of threads.

In another possible example, when the target child process creates the working thread, whether the context of the working thread of the template container is stored in the serverless computing apparatus further needs to be determined. If the context of the working thread of the template container is stored in the serverless computing apparatus, when creating the working thread, the target child process needs to recover, based on the context stored in the serverless computing apparatus, the working thread that is disabled during the fork operation for the first time.

### (4) Migration

After the fork operation is performed twice on the main thread of the template container, to obtain the target child process, the template container further needs to return a process identifier of the target process to the control process. After receiving the process identifier of the target process, the control process migrates a control group (cgroup) of the target child process to the function container based on the process identifier of the target process, so that a finally generated target child process instance is completely located in an isolation environment of the function container.

In this embodiment of this application, the plurality of threads of the language runtime are processed in the user mode, so that a multi-thread language runtime can create the target child process through POSIX fork. In the process of creating the target child process through POSIX fork, the POSIX includes a fork-based system call, and a child process that is exactly the same as the parent process can be generated by using the fork-based system call. Specifically, the fork operation creates a new address space as an address space of the child process. The new address space has a same memory segment as the parent process. To reduce memory copy overheads during fork, the fork-based system call uses a copy-on-write (Copy-on-Write) method. During fork, copy is not performed in the new address space. Instead, the two address spaces first point to a same physical memory segment, a copy-on-write mark is set, and a physical memory page is copied when a write operation occurs. The copy-on-write mechanism improves performance of the fork operation. In a scenario in which a serverless function is started, because different instances of a same function have similar start processes, the fork-based system call is used to fork a new instance from an initialized "template" process (template container). This can greatly improve start performance of the serverless instance.

Based on the multi-thread container loading solution described above, an embodiment of this application further provides a schematic flowchart of a multi-thread container loading method. Refer to FIG. 7. The method is performed by a serverless computing apparatus, and the method includes step S701 to step S706.

Step S701: Receive function code and a functional dependency that are sent by a user.

After developing the function code, a serverless function developer packages the function code and the functional dependency of the function, and uploads the function code and the functional dependency of the function to the serverless computing apparatus. The functional dependency is a constraint between relationships of different attributes (or attribute sets) in a database, and can also be regarded as a mapping between the attributes.

In a possible example, the serverless function developer can write the function code in Python or NodeJS. It should be noted that a language runtime of Python has only one main thread. Therefore, when the serverless function developer uses Python to write the function code, a template container corresponding to a language runtime of the function has only one main thread, and has no working thread.

Step S702: Deploy the received function code and functional dependency in a function container.

After receiving the function code and the functional dependency that are sent by the user, the serverless computing apparatus stores the function code and the functional dependency in the function container. Specifically, after receiving the function code and the functional dependency that are sent by the user, the serverless computing apparatus determines whether an empty function container exists in the serverless computing apparatus. When an empty function container exists in the serverless computing apparatus, the serverless computing apparatus uses the empty function container as the function container, and deploys the received function code and functional dependency in the function container. When no empty function container exists in the serverless computing apparatus, the serverless computing apparatus regenerates an empty function container as the function container. Then, the serverless computing apparatus deploys the received functional dependency and function code in the function container.

When the empty function container is generated, an idle process needs to be started, and a new namespace and cgroup are set for the process. In this case, a process identifier of the idle process is a process identifier of the function container. Further, an idle process in the function container can be determined by obtaining the process identifier of the function container, and a namespace and a cgroup of the function container can be determined by using the idle process.

Step S703: Receive a function call request sent by the user.

After the serverless computing apparatus receives the function call request sent by the user, a control process sends the function call request to a template container corresponding to a language runtime of a function that needs to be called by the function call request.

It should be noted that, after receiving the function call request sent by the user, the serverless computing apparatus determines whether the template container corresponding to the language runtime of the function that needs to be called in the function call request exists in the serverless computing apparatus. If the template container corresponding to the language runtime of the function that needs to be called exists in the serverless computing apparatus, the control process directly forwards the function call request to the template container. If the template container corresponding to the language runtime of the function that needs to be called does not exist in the serverless computing apparatus, the serverless computing apparatus creates a corresponding template container based on the language runtime of the function that needs to be called, that is, the newly generated template container is a language runtime process of the function. Then, the control process forwards the function call request of the user to the newly created template container.

It should be noted that, in this solution, a template container corresponding to each language runtime needs to be created for only once. The newly created template container is stored in the serverless computing apparatus for subsequent use.

Step S704: Obtain the template container corresponding to the function that needs to be called by the function call request and the process identifier of the function container.

In this solution, the template container is the language runtime process of the function that includes function as a service logic. When forwarding the function request of the user to the template container, the control process further needs to send, to the template container, the pid of the corresponding function container in which the function that needs to be called in the function call request is deployed.

In a possible example, after receiving the function call request of the user, the control process obtains, based on the function that needs to be called in the function call request, the process identifier of the function container in which the function is deployed.

In another possible example, the serverless computing apparatus deploys the received function code and functional dependency in the function container, and sends the pid of the function container to the control process. The control process sends the pid of the function container to the corresponding template container.

Step S705: Fork the template container, and migrate a process generated through fork to the function container.

After receiving the function call request and the process identifier of the target container in which the function that needs to be called by the function call request is deployed that are forwarded by the control process, the template container starts to perform fork.

Before the template container calls the fork operation, whether the language runtime of the template container is multi-threaded further needs to be determined. When the language runtime of the template container is not multi-threaded, the template container directly calls the fork operation.

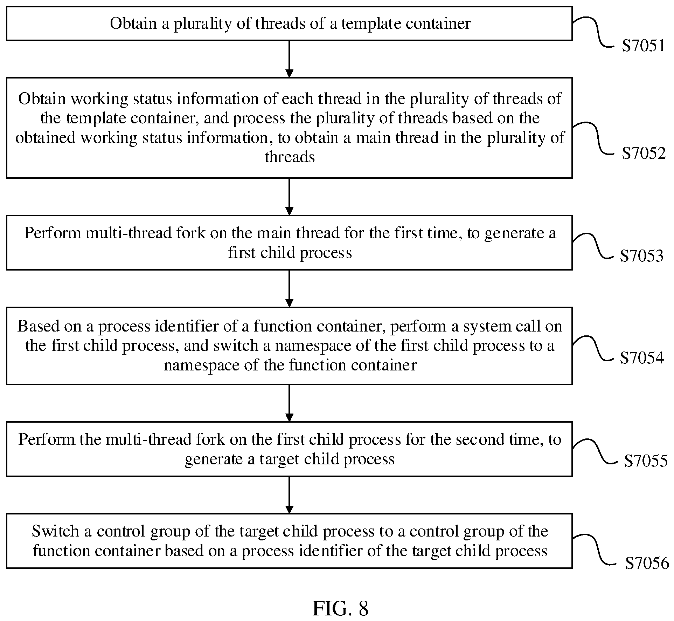

When the language runtime corresponding to the template container is multi-threaded, a status of a working thread of the template container further needs to be determined. Specifically, when multi-thread fork is performed on the template container, as shown in FIG. 8, step S7051 to step S7056 are included.

Step S7051: Obtain a plurality of threads of the template container.

The plurality of threads of the obtained template container usually include one main thread and a plurality of working threads.

Step S7052: Obtain working status information of each thread in the plurality of threads of the template container, and process the plurality of threads based on the obtained working status information, to obtain a main thread in the plurality of threads.

Because an existing language runtime is usually multi-threaded, for a parent process of the plurality of threads, fork is performed only on a thread that actually calls fork, and another process disappears from a child process after fork. This avoids a mutual exclusion problem caused by the disappeared thread after the fork operation is performed on the template container.

In a possible example, the template container obtains working status information of each working thread. When the working status information of each working thread is a first state, the control thread triggers the main thread of the template container to call the fork operation, and disables the working thread of the template container in a process of performing the fork operation. The first state includes: a state in which the working thread is blocked because of waiting for a task, a state in which the working thread does not need to store context, and a state in which the working thread has no logical interaction with the main thread.

In a possible example, the template container obtains the working status information of each working thread, and when status information of at least one working thread in the working thread of the template container is not the first state, the template container synchronizes a status of the working thread of the template container, so that status information of all working threads of the template container is the first state. Then, the control thread triggers the main thread of the template container to call the fork operation, and disables the working thread of the template container in the process of performing the fork operation.

In a possible example, the template container obtains the working status information of each working thread. When the status information of the at least one working thread in the working thread of the template container is not the first state, the template container stores context of the working thread whose status information is not the first state. Then, the control thread triggers the main thread of the template container to call the fork operation, and disables the working thread of the template container in the process of performing the fork operation.

Step S7053: Perform the multi-thread fork on the main thread for the first time, to generate a first child process.

Step S7054: Based on the process identifier of the function container, perform a system call on the first child process, and switch a namespace of the first child process to a namespace of the function container.

After receiving the function call request sent by the user, the template container performs the fork operation on the main thread for the first time, to obtain the first child process. Then, the template container determines, based on the received pid of the function container, the namespace corresponding to the function container. Then, the namespace of the first child process is switched to the function container by performing a system call by using setns and chroot of the Linux system. Specifically, the template container switches a root directory of the first child process to a root directory of the function container by calling a chroot (change root) command. Then, the template container calls a setns function to add the first child process to the namespace of the function container.

Step S7055: Perform the multi-thread fork on the first child process for the second time, to generate a target child process.

Although the namespace of the generated first child process is switched to the namespace of the function container in a process performing the fork operation on the main thread for the first time, the switching operation does not take effect immediately. Therefore, the multi-thread fork needs to be performed on the first child process for the second time.

The fork operation is performed on the first child process for the second time, to obtain the target child process. In this case, a namespace environment of the target child process is already in the function container.

After the fork operation is completed for the second time, and the target child process is obtained, the working thread disabled in step S7052 further needs to be recovered. In an example, after the fork operation is completed for the second time, the target child process initializes a data structure that is in a memory and that is used to manage a working thread, reuses the process during the initialization of the runtime process of NodeJS, and re-creates various working threads, so that the newly generated target child process can recover running statuses of the plurality of threads.

In an example, when the target child process creates the working thread, whether the context of the working thread of the template container is stored in the serverless computing apparatus further needs to be determined. If the context of the working thread of the template container is stored in the serverless computing apparatus, when creating the working thread, the target child process needs to recover, based on the context stored in the serverless computing apparatus, the working thread that is disabled during the fork operation for the first time.

Step S7056: Switch a control group of the target child process to a control group of the function container based on a process identifier of the target child process.

After the fork operation is completed for the second time, the template container further needs to return the pid of the target child process to the control process. After receiving the pid of the target child process, the control process is responsible for migration of the cgroup of the target child process, so that the generated target child process is completely located in an isolation environment of the function container.

Step S706: Load the function in the function container.

In this embodiment of this application, before fork is performed on the template container, whether the language runtime corresponding to the function is multi-threaded further needs to be determined. When the language runtime of the function is multi-threaded, the working thread of the template container corresponding to the language runtime of the function needs to be processed. Then, the main thread of the template container is used as the parent process, POSIX fork is called twice, to obtain the new process, and the namespace and the control group of the new process are switched to the function container. Further, after the target child process is obtained by calling POSIX fork twice, the newly generated process further needs to initialize the data structure that is in the memory and that is used to manage the working thread, reuse the process during the initialization of the current language runtime process, and re-create the various working threads, so that the newly generated process recovers the running statuses of the plurality of threads. In this embodiment of this application, before the fork operation, statuses of the plurality of threads of a multi-thread language runtime are stored, so that the main thread of the template container can directly call POSIX fork to copy a status of the main thread. The statuses of the plurality of threads are then recovered after the fork operation, and creation of a multi-thread language runtime process is implemented through fork. Further, in this embodiment of this application, an initialized language runtime process status can be reused through the multi-thread fork operation, to skip most initialization processes, and quickly create a new multi-thread language runtime process. In the process of creating the target child process through the fork operation, a copy-on-write mechanism of fork is used, so that containers of a same function can share some statues, thereby reducing a proportional set size (Proportional Set Size, PSS) actually used after a shared library is proportionally allocated.

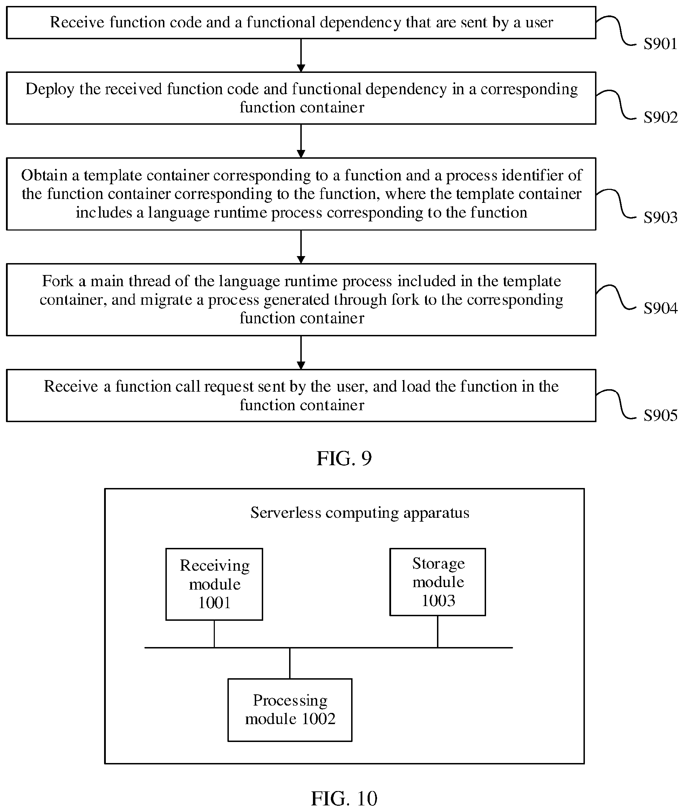

FIG. 9 is a schematic flowchart of another multi-thread container loading method according to an embodiment of this application. Refer to FIG. 9. The method is performed by a serverless computing apparatus, and the method includes step S901 to step S905.

Step S901: Receive function code and a functional dependency that are sent by a user.

Step S902: Deploy the received function code and functional dependency in a corresponding function container.

Specific implementations of step S901 and step S902 are the same as the implementations of step S701 and step S702. Details are not described herein again.

Step S903: Obtain a template container corresponding to the function and a process identifier of the function container corresponding to the function, where the template container includes a language runtime process of the function.

Step S904: Fork a main thread of the language runtime process included in the template container, and migrate a process generated through fork to the function container.

A process of performing multi-thread fork on the template container is the same as step S7051 to step S7056. Details are not described herein again.

Step S905: Receive a function call request sent by the user, and load the function in the function container.

In this embodiment of this application, after the serverless computing apparatus receives the function code and the functional dependency that are sent by the user, the serverless computing apparatus starts to generate a function instance of the function. In other words, in this embodiment of this application, the function instance of the function is generated in the serverless computing apparatus before the serverless computing apparatus receives the function call request sent by the user, thereby reducing waiting time for the user to perform a function call.

FIG. 10 is a diagram of a structure of a serverless computing apparatus according to an embodiment of this application. The serverless computing apparatus shown in FIG. 10 is configured to load a multi-thread container in a serverless computing process.

The serverless computing apparatus shown in FIG. 10 includes a receiving module 1001, a processing module 1002, and a storage module 1003.

The receiving module 1001 is configured to receive function code and a functional dependency that are sent by a user. Then, the receiving module 1001 deploys the received function code and functional dependency in a function container.

The receiving module 1001 is further configured to receive a function call request sent by the user. Then, the receiving module 1001 forwards, to a template container corresponding to the function, the function call request and a process identifier of the corresponding function container in which a function that needs to be called by the function call request is deployed.

The processing module 1002 is configured to perform a fork operation on the template container for the first time, to obtain a first child process. Then, based on the process identifier of the function container, the processing module 1002 performs a system call on the first child process, and switches a namespace of the first child process to a namespace of the function container. After the processing module 1002 switches the namespace of the first child process to the namespace of the function container, the processing module 1002 performs multi-thread fork on the first child process for the second time, to obtain a target child process. Then, the processing module 1002 switches a control group of the target child process to a control group of the function container based on a process identifier of the target child process.

The storage module 1003 is configured to store the function code and the functional dependency that are received by the receiving module 1001.

Optionally, after the serverless computing apparatus receives the function call request sent by the user, the serverless computing apparatus generates a new function instance based on the function call request, and migrates the function instance to a target isolation environment (function container). Refer to the foregoing description in the embodiments related to FIG. 5, FIG. 6, FIG. 7, FIG. 8, and FIG. 9. Details are not described herein again.

For other functions that can be performed by the serverless computing apparatus shown in FIG. 10, refer to the description in the foregoing method embodiments.

The apparatus embodiment described in FIG. 10 is merely an example. For example, division into the modules is merely logical function division, and may be other division in an actual implementation. For example, a plurality of modules or components may be combined or integrated into another system, or some features may be ignored or not performed. Functional modules in embodiments of this application may be integrated into one processing module, each of the modules may exist alone physically, or two or more modules are integrated into one module.

For example, the modules in FIG. 10 may be implemented in a form of hardware, or may be implemented in a form of a software functional module. For example, when software is used for implementation, the processing module 1002 may be implemented by a software functional module generated after the at least one processor 301 in FIG. 3 reads the program code stored in the memory 303. The modules in FIG. 10 may alternatively be separately implemented by different hardware in the serverless computing apparatus. For example, the processing module 1002 is implemented by some processing resources (for example, a core in a multi-core processor) in the at least one processor 301 in FIG. 3, and the receiving module 1001 is implemented by other processing resources (for example, another core in a multi-core processor) in the network interface 302 and the at least one processor 301 in FIG. 3, or implemented by using a programmable device like an FPGA or a coprocessor. It is clear that the functional modules may alternatively be implemented by a combination of software and hardware. For example, the receiving module 1001 is implemented by a hardware programmable device, and the processing module 1002 is a software functional module generated after a CPU reads the program code stored in the memory.

An embodiment of this application further provides a serverless computing system, including at least one serverless computing apparatus (as shown in FIG. 3 and FIG. 10).

Based on the container engine-based container instance start method shown in FIG. 1a to FIG. 1c and the multi-thread container loading method shown in FIG. 7, in this embodiment of this application, start latencies and memory overheads for starting a container instance by using the methods shown in FIG. 1 and FIG. 7 are compared. Comparison results are shown in Table 1.

**Table 1: Start overheads and memory overheads for starting a container instance**

| Start mode | Started through a container engine | Started through fork |
|---|---|---|
| Start latency | 85.5 ms | 8.4 ms |
| PSS memory overheads of 8 concurrent containers | 14.66 MB | 7.25 MB |

It can be learned from Table 1 that the start latency for directly starting a container by using the container engine is 85.5 ms. However, the start latency for starting a container through the fork operation in this solution is 8.4 ms (the start latency is reduced to less than 10 ms).

Further, Table 1 shows that the start latency that needs to be consumed for starting a container instance by using the conventional container engine method is 85.5 ms. When starting a container instance by using the container engine, a complete container instance needs to be created, including steps such as creating namespace and cgroup isolation environments of the container and initializing the language runtime. In addition, when the container instance is started by using the conventional method, the PSS memory overheads do not change with a quantity of instances. When 8 same container instances are started, the PSS overheads of each container are 14.66 MB.

When the container instance is started based on the fork method in this solution, an initialized language runtime process status can be reused through the multi-thread fork, to skip most initialization processes, and quickly create a new multi-thread language runtime process. Therefore, when the container instance is started based on the fork method in this solution, it takes only 8.4 ms to start a new instance. In addition, a copy-on-write (Copy-on-Write, COW) mechanism of fork enables containers of a same function to share some statuses, thereby reducing the PSS overheads. In this embodiment of this application, when the 8 same container instances are started, the PSS overheads of each container is 7.25 MB.

Embodiments in this specification are all described in a progressive manner, for same or similar parts in embodiments, refer to these embodiments, and each embodiment focuses on a difference from other embodiments. Especially, a system embodiment is basically similar to a method embodiment, and therefore is described briefly; for related parts, refer to partial descriptions in the method embodiment.

A person of ordinary skill in the art may understand that, each aspect of this application or a possible implementation of each aspect may be specifically implemented as a computer program product. The computer program product is computer-readable program code stored in a computer-readable medium.

The computer-readable medium may be a computer-readable signal medium or a computer-readable storage medium. The computer-readable storage medium includes but is not limited to an electronic, magnetic, optical, electromagnetic, infrared, or semiconductor system, device, or apparatus, or any suitable combination thereof. For example, the computer-readable storage medium is a random access memory (RAM), a read-only memory (ROM), an erasable programmable read-only memory (EPROM), or a portable read-only memory (CD-ROM).

Apparently, a person skilled in the art can make various modifications and variations to the present invention without departing from the scope of the present invention. The present invention is intended to cover these modifications and variations provided that they fall within the scope of protection defined by the following claims of the present invention.

## Claims

1. A container loading method, comprising:
receiving function code and a functional dependency that are sent by a user; and
deploying the function code and the functional dependency of a function in a function container (402);
receiving a function call request sent by the user, wherein the function call request comprises information of the function;
obtaining a process identifier of a corresponding function container based on the information of the function, wherein the function is deployed in the function container (402);
forking a main thread of a language runtime process in a template container (401) based on the process identifier of the function container (402), to obtain a target child process, wherein the language runtime process is a process providing a runtime environment for a programming language, and wherein both the language runtime process in the template container (401) and the target child process are language runtime processes corresponding to the function, and a namespace of the target child process is located in the function container (402);
switching a control group of the target child process to a control group of the function container (402) based on the process identifier of the target child process, to migrate the target child process to the function container (402); and
loading the function in the function container (402).

2. The method according to claim 1, wherein the information of the function comprises at least one of a function name, a function type, or a function ID.

3. The method according to claim 1, wherein before the forking a main thread of a language runtime process in a template container (401) based on the process identifier of the function container (402), to obtain a target child process, the method further comprises:
obtaining a template container (401) corresponding to the function;
when the template container (401) corresponding to the function does not exist, creating, based on a language runtime corresponding to the function, a template container (401) corresponding to the function; and
storing the template container (401).

4. The method according to any one of claims 1 to 3, wherein before the forking a main thread of a language runtime process in a template container (401) based on the process identifier of the function container (402), to obtain a target child process, the method further comprises:
when the language runtime of the function is multi-threaded, obtaining status information of each working thread of the template container (401);
if all working threads are in a first state, disabling each working thread;
if at least one working thread is not in the first state, storing context of each working thread that is not in the first state, and disabling each working thread;
wherein the first state comprises: a state in which the working thread is blocked because of waiting for a task, a state in which the working thread does not need to store context, and a state in which the working thread has no logical interaction with the main thread.

5. The method according to any one of claims 1 to 4, wherein the forking a main thread of a language runtime process in a template container (401) based on the process identifier of the function container (402), to obtain a target child process comprises:
forking the main thread for the first time, to obtain a first child process;
switching a namespace of the first child process to the function container (402) based on the process identifier of the function container (402); and
forking the first child process to obtain the target child process, wherein the namespace of the target child process is located in the function container (402).

6. The method according to any one of claims 1 to 5, wherein after the switching a control group of the target child process to the function container (402) based on the process identifier of the target child process, the method further comprises:
initializing a data structure used to manage a working thread, and creating a working thread of the target child process.

7. A serverless computing apparatus, comprising:
a receiving module (801, 1001), configured to receive function code and a functional dependency that are sent by a user and deploy the function code and the functional dependency of a function in a function container (402), receive a function call request sent by the user, wherein the function call request comprises information of the function; and
a processing module (1002), configured to obtain a process identifier of a corresponding function container based on the information of the function, wherein the function is deployed in the function container (402), and
the processing module (1002) is further configured to: fork a main thread of a language runtime process in a template container (401) based on the process identifier of the function container (402), to obtain a target child process, wherein the language runtime process is a process providing a runtime environment for a programming language, and wherein both the language runtime process in the template container (401) and the target child process are language runtime processes corresponding to the function, and a namespace of the target child process is located in the function container (402); switch a control group of the target child process to a control group of the function container (402) based on the process identifier of the target child process, to migrate the target child process to the function container (402); and load the function in the function container (402).

8. The apparatus according to claim 7, wherein the information of the function comprises at least one of a function name, a function type, and a function ID.

9. The apparatus according to claim 7, wherein the processing module (1002) is further configured to:
obtain a template container (401) corresponding to the function;
when the template container (401) corresponding to the function does not exist in the serverless computing apparatus, create, based on a language runtime corresponding to the function, a template container (401) corresponding to the function; and store the template container (401) in the serverless computing apparatus.

10. The apparatus according to any one of claims 7 to 9, wherein the processing module (1002) is further configured to:
fork the main thread for the first time, to obtain a first child process;
switch a namespace of the first child process to the function container (402) based on the process identifier of the function container (402); and
fork the first child process to obtain the target child process, wherein the namespace of the target child process is located in the function container (402).

11. A serverless computing system, comprising the serverless computing apparatus according to any one of claims 7 to 10.

12. A computer-readable medium, wherein the computer storage medium stores instructions, and when the instructions are run on a computer, the computer is enabled to perform the method according to any one of claims 1 to 6.

13. A computer program product comprising instructions, wherein when the instructions are run on a computer, the computer is enabled to perform the method according to any one of claims 1 to 6.

## Patentansprüche

1. Verfahren zum Laden von Behältern, umfassend:
Empfangen von Funktionscode und einer funktionalen Abhängigkeit, die durch einen Benutzer gesendet werden; und
Bereitstellen des Funktionscodes und der funktionalen Abhängigkeit einer Funktion in einem Funktionsbehälter (402); Empfangen einer durch den Benutzer gesendeten Funktionsaufrufanforderung, wobei die Funktionsaufrufanforderung Informationen über die Funktion umfasst;
Erhalten einer Prozesskennung eines entsprechenden Funktionsbehälters basierend auf den Informationen der Funktion, wobei die Funktion in dem Funktionsbehälter bereitgestellt ist (402);
Abzweigen eines Hauptthreads eines Sprachlaufzeitprozesses in einem Vorlagenbehälter (401) basierend auf der Prozesskennung des Funktionsbehälters (402), um einen Ziel-Tochterprozess zu erhalten, wobei der Sprachlaufzeitprozess ein Prozess ist, der eine Laufzeitumgebung für eine Programmiersprache bereitstellt, und wobei sowohl der Sprachlaufzeitprozess in dem Vorlagenbehälter (401) als auch der Ziel-Tochterprozess der Funktion entsprechende Sprachlaufzeitprozesse sind und sich ein Namensraum des Ziel-Tochterprozesses in dem Funktionsbehälter (402) befindet;
Umschalten einer Steuerungsgruppe des Ziel-Tochterprozesses auf eine Steuerungsgruppe des Funktionsbehälters (402) basierend auf der Prozesskennung des Ziel-Tochterprozesses, um den Ziel-Tochterprozess in den Funktionsbehälter (402) zu migrieren; und Laden der Funktion in den Funktionsbehälter (402).

2. Verfahren nach Anspruch 1, wobei die Informationen der Funktion mindestens eines von einem Funktionsnamen, einem Funktionstyp oder einer Funktions-ID umfassen.

3. Verfahren nach Anspruch 1, wobei vor dem Abzweigen eines Hauptthreads eines Sprachlaufzeitprozesses in einem Vorlagenbehälter (401) basierend auf der Prozesskennung des Funktionsbehälters (402) zum Erhalten eines Ziel-Tochterprozesses das Verfahren ferner Folgendes umfasst:
Erhalten eines der Funktion entsprechenden Vorlagenbehälters (401);
wenn der der Funktion entsprechende Vorlagenbehälter (401) nicht vorhanden ist, Erstellen eines der Funktion entsprechenden Vorlagenbehälters (401) basierend auf einer der Funktion entsprechenden Sprachlaufzeit; und
Speichern des Vorlagenbehälters (401).

4. Verfahren nach einem der Ansprüche 1 bis 3, wobei vor dem Abzweigen eines Hauptthreads eines Sprachlaufzeitprozesses in einem Vorlagenbehälter (401) basierend auf der Prozesskennung des Funktionsbehälters (402) zum Erhalten eines Ziel-Tochterprozesses das Verfahren ferner Folgendes umfasst:
wenn die Sprachlaufzeit der Funktion multithreadfähig ist, Erhalten von Statusinformationen zu jedem aktiven Thread des Vorlagenbehälters (401);
wenn sich alle aktiven Threads in einem ersten Zustand befinden, Deaktivieren jedes aktiven Threads;
wenn sich mindestens ein aktiver Thread nicht in dem ersten Zustand befindet, Speichern des Kontexts jedes aktiven Threads, der sich nicht in dem ersten Zustand befindet, und Deaktivieren jedes aktiven Threads;
wobei der erste Zustand Folgendes umfasst: einen Zustand, in dem der aktive Thread aufgrund des Wartens auf eine Aufgabe blockiert ist, einen Zustand, in dem der aktive Thread keinen Kontext speichern muss, und einen Zustand, in dem der aktive Thread keine logische Interaktion mit dem Hauptthread aufweist.

5. Verfahren nach einem der Ansprüche 1 bis 4, wobei das Abzweigen eines Hauptthreads eines Sprachlaufzeitprozesses in einem Vorlagenbehälter (401) basierend auf der Prozesskennung des Funktionsbehälters (402) zum Erhalten eines Ziel-Tochterprozesses Folgendes umfasst:
Abzweigen des Hauptthreads zum ersten Mal, um einen ersten Tochterprozess zu erhalten;
Umschalten eines Namensraums des ersten Tochterprozesses auf den Funktionsbehälter (402) basierend auf der Prozesskennung des Funktionsbehälters (402); und
Abzweigen des ersten Tochterprozesses, um den Ziel-Tochterprozess zu erhalten, wobei sich der Namensraum des Ziel-Tochterprozesses in dem Funktionsbehälter (402) befindet.

6. Verfahren nach einem der Ansprüche 1 bis 5, wobei nach dem Umschalten einer Steuerungsgruppe des Ziel-Tochterprozesses auf den Funktionsbehälter (402) basierend auf der Prozesskennung des Ziel-Tochterprozesses das Verfahren ferner Folgendes umfasst: Initialisieren einer Datenstruktur, die zum Verwalten eines aktiven Threads verwendet wird, und Erstellen eines aktiven Threads des Ziel-Tochterprozesses.

7. Serverlose Rechenvorrichtung, umfassend:
ein Empfangsmodul (801, 1001), das konfiguriert ist, um einen Funktionscode und eine funktionale Abhängigkeit zu empfangen, die durch einen Benutzer gesendet werden, und den Funktionscode und die funktionale Abhängigkeit einer Funktion in einem Funktionsbehälter (402) bereitzustellen, und eine durch den Benutzer gesendete Funktionsaufrufanforderung zu empfangen, wobei die Funktionsaufrufanforderung Informationen über die Funktion umfasst; und
ein Verarbeitungsmodul (1002), das konfiguriert ist, um eine Prozesskennung eines entsprechenden Funktionsbehälters basierend auf den Informationen der Funktion zu erhalten, wobei die Funktion in dem Funktionsbehälter bereitgestellt ist (402), und
das Verarbeitungsmodul (1002) ferner zu Folgendem konfiguriert ist: Abzweigen eines Hauptthreads eines Sprachlaufzeitprozesses in einem Vorlagenbehälter (401) basierend auf der Prozesskennung des Funktionsbehälters (402), um einen Ziel-Tochterprozess zu erhalten, wobei der Sprachlaufzeitprozess ein Prozess ist, der eine Laufzeitumgebung für eine Programmiersprache bereitstellt,
und wobei sowohl der Sprachlaufzeitprozess in dem Vorlagenbehälter (401) als auch der Ziel-Tochterprozess der Funktion entsprechende Sprachlaufzeitprozesse sind und sich ein Namensraum des Ziel-Tochterprozesses in dem Funktionsbehälter (402) befindet; Umschalten einer Steuerungsgruppe des Ziel-Tochterprozesses auf eine Steuerungsgruppe des Funktionsbehälters (402) basierend auf der Prozesskennung des Ziel-Tochterprozesses, um den Ziel-Tochterprozess in den Funktionsbehälter (402) zu migrieren; und Laden der Funktion in den Funktionsbehälter (402).

8. Vorrichtung nach Anspruch 7, wobei die Informationen der Funktion mindestens eines von einem Funktionsnamen, einem Funktionstyp und einer Funktions-ID umfassen.

9. Vorrichtung nach Anspruch 7, wobei das Verarbeitungsmodul (1002) ferner zu Folgendem konfiguriert ist:
Erhalten eines der Funktion entsprechenden Vorlagenbehälters (401);
wenn der der Funktion entsprechende Vorlagenbehälter (401) in der serverlosen Rechenvorrichtung nicht vorhanden ist, Erstellen eines der Funktion entsprechenden Vorlagenbehälters (401) basierend auf einer der Funktion entsprechenden Sprachlaufzeit;
und Speichern des Vorlagenbehälters (401) in der serverlosen Rechenvorrichtung.

10. Vorrichtung nach einem der Ansprüche 7 bis 9, wobei das Verarbeitungsmodul (1002) ferner zu Folgendem konfiguriert ist:
Abzweigen des Hauptthreads zum ersten Mal, um einen ersten Tochterprozess zu erhalten;
Umschalten eines Namensraums des ersten Tochterprozesses auf den Funktionsbehälter (402) basierend auf der Prozesskennung des Funktionsbehälters (402); und
Abzweigen des ersten Tochterprozesses, um den Ziel-Tochterprozess zu erhalten, wobei sich der Namensraum des Ziel-Tochterprozesses in dem Funktionsbehälter (402) befindet.

11. Serverloses Rechensystem, umfassend die serverlose Rechenvorrichtung nach einem der Ansprüche 7 bis 10.

12. Computerlesbares Medium, wobei das Computerspeichermedium Anweisungen speichert und, wenn die Anweisungen auf einem Computer ausgeführt werden, der Computer in die Lage versetzt wird, das Verfahren nach einem der Ansprüche 1 bis 6 durchzuführen.

13. Computerprogrammprodukt, umfassend Anweisungen, wobei, wenn die Anweisungen auf einem Computer ausgeführt werden, der Computer in die Lage versetzt wird, das Verfahren nach einem der Ansprüche 1 bis 6 durchzuführen.

## Revendications

1. Procédé de chargement de conteneur, comprenant :
la réception d'un code de fonction et d'une dépendance fonctionnelle envoyés par un utilisateur ; et
le déploiement du code de fonction et de la dépendance fonctionnelle d'une fonction dans un conteneur de fonctions (402) ;
la réception d'une requête d'appel de fonction envoyée par l'utilisateur, dans lequel la requête d'appel de fonction comprend des informations sur la fonction ;
l'obtention d'un identifiant de processus d'un conteneur de fonction correspondant sur la base des informations de la fonction, dans lequel la fonction est déployée dans le conteneur de fonction (402) ;
la duplication d'un thread principal d'un processus d'exécution de langage dans un conteneur modèle (401) sur la base de l'identifiant de processus du conteneur de fonction (402), afin d'obtenir un processus fils cible, dans lequel le processus d'exécution de langage est un processus fournissant un environnement d'exécution pour un langage de programmation, et
dans lequel le processus d'exécution de langage dans le conteneur modèle (401) et le processus fils cible sont des processus d'exécution de langage correspondant à la fonction,
et un espace de noms du processus fils cible est situé dans le conteneur de fonction (402) ;
le basculement d'un groupe de contrôle du processus fils cible vers un groupe de contrôle du conteneur de fonctions (402) sur la base de l'identifiant du processus fils cible, afin de migrer le processus fils cible vers le conteneur de fonctions (402) ; et
le chargement de la fonction dans le conteneur de fonctions (402) .

2. Procédé selon la revendication 1, dans lequel les informations de la fonction comprennent au moins l'un des éléments suivants : un nom de fonction, un type de fonction ou un identifiant de fonction.

3. Procédé selon la revendication 1, dans lequel, avant de dupliquer un thread principal d'un processus d'exécution de langage dans un conteneur modèle (401) sur la base de l'identifiant de processus du conteneur de fonction (402), afin d'obtenir un processus fils cible, le procédé comprend en outre :
l'obtention d'un conteneur modèle (401) correspondant à la fonction ;
lorsque le conteneur modèle (401) correspondant à la fonction n'existe pas, créer, sur la base d'un environnement d'exécution de langage correspondant à la fonction, un conteneur modèle (401) correspondant à la fonction ; et
le stockage du conteneur modèle (401).

4. Procédé selon l'une quelconque des revendications 1 à 3, dans lequel, avant de dupliquer un thread principal d'un processus d'exécution de langage dans un conteneur modèle (401) sur la base de l'identifiant de processus du conteneur de fonction (402), afin d'obtenir un processus fils cible, le procédé comprend en outre :
lorsque l'environnement d'exécution du langage de la fonction est multithread, l'obtention des informations d'état de chaque thread de travail du conteneur modèle (401) ;
si tous les threads de travail sont dans un premier état, la désactivation de chaque thread de travail ;
si au moins un thread de travail n'est pas dans le premier état, le stockage du contexte de chaque thread de travail qui n'est pas dans le premier état et la désactivation de chaque thread de travail ;
dans lequel le premier état comprend : un état dans lequel le thread de travail est bloqué parce qu'il attend une tâche, un état dans lequel le thread de travail n'a pas besoin de stocker de contexte et un état dans lequel le thread de travail n'a aucune interaction logique avec le thread principal.

5. Procédé selon l'une quelconque des revendications 1 à 4, dans lequel la duplication d'un thread principal d'un processus d'exécution de langage dans un conteneur modèle (401) sur la base de l'identifiant de processus du conteneur de fonction (402), afin d'obtenir un processus fils cible, comprend :
la duplication du thread principal pour la première fois afin d'obtenir un premier processus fils ;
le basculement d'un espace de noms du premier processus fils vers le conteneur de fonctions (402) sur la base de l'identifiant de processus du conteneur de fonctions (402) ; et
la duplication du premier processus fils pour obtenir le processus fils cible, dans lequel l'espace de noms du processus fils cible est situé dans le conteneur de fonctions (402).

6. Procédé selon l'une quelconque des revendications 1 à 5, dans lequel, après le basculement d'un groupe de contrôle du processus fils cible vers le conteneur de fonctions (402) sur la base de l'identifiant de processus du processus fils cible, le procédé comprend en outre :
l'initialisation d'une structure de données utilisée pour gérer un thread de travail et la création d'un thread de travail du processus fils cible.

7. Appareil informatique sans serveur, comprenant :
un module de réception (801, 1001), configuré pour recevoir un code de fonction et une dépendance fonctionnelle envoyés par un utilisateur et déployer le code de fonction et la dépendance fonctionnelle d'une fonction dans un conteneur de fonctions (402), recevoir une requête d'appel de fonction envoyée par l'utilisateur, dans lequel la requête d'appel de fonction comprend des informations sur la fonction ; et
un module de traitement (1002), configuré pour obtenir un identifiant de processus d'un conteneur de fonction correspondant sur la base des informations de la fonction, dans lequel la fonction est déployée dans le conteneur de fonction (402) ; et
le module de traitement (1002) est en outre configuré pour : dupliquer un thread principal d'un processus d'exécution de langage dans un conteneur modèle (401) sur la base de l'identifiant de processus du conteneur de fonction (402), afin d'obtenir un processus fils cible, dans lequel le processus d'exécution de langage est un processus fournissant un environnement d'exécution pour un langage de programmation, et dans lequel le processus d'exécution de langage dans le conteneur modèle (401) et le processus fils cible sont des processus d'exécution de langage correspondant à la fonction, et un espace de noms du processus fils cible est situé dans le conteneur de fonction (402) ; basculer un groupe de contrôle du processus fils cible vers un groupe de contrôle du conteneur de fonction (402) sur la base de l'identifiant de processus du processus fils cible, afin de migrer le processus fils cible vers le conteneur de fonction (402) ; et charger la fonction dans le conteneur de fonction (402).

8. Appareil selon la revendication 7, dans lequel les informations de la fonction comprennent au moins l'un des éléments suivants : un nom de fonction, un type de fonction et un identifiant de fonction.

9. Appareil selon la revendication 7, dans lequel le module de traitement (1002) est en outre configuré pour :
obtenir un conteneur modèle (401) correspondant à la fonction ;
lorsque le conteneur modèle (401) correspondant à la fonction n'existe pas dans l'appareil informatique sans serveur, créer, sur la base d'un environnement d'exécution de langage correspondant à la fonction, un conteneur modèle (401) correspondant à la fonction ; et stocker le conteneur modèle (401) dans l'appareil informatique sans serveur.

10. Appareil selon l'une quelconque des revendications 7 à 9, dans lequel le module de traitement (1002) est en outre configuré pour :
dupliquer le thread principal pour la première fois afin d'obtenir un premier processus fils ;
basculer un espace de noms du premier processus fils vers le conteneur de fonctions (402) sur la base de l'identifiant de processus du conteneur de fonctions (402) ; et
dupliquer le premier processus fils pour obtenir le processus fils cible, dans lequel l'espace de noms du processus fils cible est situé dans le conteneur de fonctions (402).

11. Système informatique sans serveur, comprenant l'appareil informatique sans serveur selon l'une quelconque des revendications 7 à 10.

12. Support lisible par ordinateur, dans lequel le support de stockage informatique stocke des instructions, et lorsque les instructions sont exécutées sur un ordinateur, l'ordinateur est en mesure de réaliser le procédé selon l'une quelconque des revendications 1 à 6.

13. Produit de programme informatique comprenant des instructions, dans lequel lorsque les instructions sont exécutées sur un ordinateur, l'ordinateur est en mesure de réaliser le procédé selon l'une quelconque des revendications 1 à 6.
